# EUROPÄISCHE PATENTSCHRIFT

(11) **EP 1 380 091 B1**
(45) Veröffentlichungstag und Bekanntmachung des Hinweises auf die Patenterteilung: **30.05.2012**
(21) Anmeldenummer: 02719669.0
(22) Anmeldetag: 05.03.2002
(51) Int. Cl.: H02K 7/12, F16D 49/00

(54) **ELEKTROMOTOR MIT BREMSE**
ELECTRIC MOTOR WITH BRAKES
MOTEUR ELECTRIQUE POURVU D'UN FREIN

(30) Priorität: 11.04.2001 DE 10118035
(43) Veröffentlichungstag der Anmeldung: 14.01.2004
(73) Patentinhaber: ROBERT BOSCH GMBH, 70442 Stuttgart (DE)
(72) Erfinder: HERZOG, Hans-Georg, 80637 München (DE)
(86) Internationale Anmeldenummer: PCT/DE2002/000802
(87) Internationale Veröffentlichungsnummer: WO 2002/084846

(56) Entgegenhaltungen:
- DE-A- 2 401 846
- DE-A- 19 737 239
- DE-A- 19 860 396

## Beschreibung

### Stand der Technik

Die vorliegende Erfindung betrifft einen Elektromotor, insbesondere für Elektrowerkzeuge, dessen Stator mindestens einen, einen Teilbereich des Rotors überdeckenden Polschuh aufweist, wobei in dem Polschuh ein in Richtung auf den Rotor bewegbares Bremselement angeordnet ist, dass an seiner auf den Rotor aufsetzbaren Stelle mit einem Bremsbelag versehen ist.

Insbesondere bei Elektrowerkzeugen, beispielsweise bei Winkelschleifern, Kreissägen und dergleichen, ergeben sich nach dem Abschalten des Motorstroms zum Teil sehr lange Auslaufzeiten aufgrund einer im rotierenden Werkzeug gespeicherten Rotationsenergie.

Das sich nach dem Abschalten noch drehende Werkzeug birgt eine Verletzungsgefahr für den Benutzer. Um die Auslaufzeiten von Elektrowerkzeugen zu verringern, ist es z. B. aus der DE 198 60 396 A1 bekannt, wie einleitend dargelegt, ein Bremselement im Elektromotor vorzusehen, das eine Bremswirkung auf den Rotor entfaltet, sobald der Motorstrom abgeschaltet worden ist. Eine sehr platzsparende und eine gute Bremswirkung erzielende Bremsvorrichtung ist Gegenstand der DE 198 60 396 A1. Diese bekannte Bremsvorrichtung besteht aus einem als Wippe ausgebildeten Bremselement, das in einem radial durchgehenden Freiraum in einem Polschuh des Stators des Motors aufgehängt ist. Mit einem derartigen als Wippe ausgeführten Bremselement kann aufgrund der Hebelwirkung der Wippe eine sehr große auf den Rotor einwirkende Bremskraft erzeugt werden. Das Bremselement weist an seiner auf den Rotor aufsetzbaren Stelle einen Bremsbelag auf. Gemäß der DE 198 60 396 A1 soll dieser Bremsbelag aus einem Material mit keiner bzw. nur sehr geringer magnetischer Leitfähigkeit bestehen. Ein solcher sich im Luftspalt zwischen dem Rotor und dem Stator des Motors befindlicher Bremsbelag stellt im Vergleich zu dem Polschuh einen großen magnetischen Widerstand dar, der den magnetischen Fluss im Luftspalt schwächt. Folge davon ist eine relativ hohe Leerlaufdrehzahl des Motors, die aber vornehmlich bei Elektrowerkzeugen und mit einem großen Werkzeugradius, z. B. bei Winkelschleifern, unerwünscht ist. Um die Leerlaufdrehzahl zu verringern, müssten Maßnahmen ergriffen werden, die eine Leistungsverringerung des Motors mit sich brächten, was ebenfalls nicht erwünscht ist.

### Vorteile der Erfindung

Bei einem erfindungsgemäßen Elektromotor ist das Bremselement mit einem Bremsbelag versehen, der in etwa die gleiche magnetische Leitfähigkeit aufweist wie der mindestens eine Polschuh, in den das Bremselement eingesetzt ist. Dadurch stellt der Bremsbelag im Luftspalt zwischen dem Stator und dem Rotor des Motors keinen erhöhten magnetischen Widerstand dar, der den Erregerfluss beeinträchtigt. Es kommt somit auch nicht zu einer unerwünschten hohen Leerlaufdrehzahl des Motors.

Vorteilhafte Weiterbildungen der Erfindung gehen aus den Unteransprüchen hervor.

Der Bremsbelag besteht vorteilhafter Weise aus einem mit Eisenpulver gefüllten Trägermaterial.

Es ist zweckmäßig, dass das Bremselement als Wippe ausgebildet ist, die in einem radial durchgehenden Freiraum im Polschuh aufgehängt ist. Durch die Hebelwirkung der Wippe lässt sich eine große Bremskraft für den Rotor des Motors erzeugen. Der Freiraum innerhalb des Polschuhs ist vorzugsweise axial jeweils von einem Steg begrenzt.

Das Bremselement ist gegenüber dem Stator um eine Schwenkachse in Grenzen schwenkbar gelagert, wobei die Schwenkachse vorzugsweise parallel zu der Drehachse des Rotors liegt. Das Bremselement kann seitlich mit je einem Zapfen versehen sein, der jeweils in Ausnehmungen der Stege des Polschuhs eingreift und die Schwenkachse bildet.

Es ist zweckmäßig, dass das Bremselement als mehrarmiger Hebel mit einem Bremsarm und einem Ausrückarm ausgebildet ist, wobei der Bremsarm mit einer Bremskraft beaufschlagt ist und der Ausrückarm bei bestromter Ständerwicklung eine der Bremskraft entgegengerichtete Ausrückkraft auf das Bremselement ausübt.

Vorzugsweise hat eine Trennfläche zwischen dem Ausrückarm und dem Polschuh einen größeren Radialabstand von der Schwenkachse als eine Trennfläche zwischen dem Bremsarm und dem Polschuh.

In einer vorteilhaften Ausführung hat der Bremsarm mindestens ein Sackloch, das zur Aufnahme einer Druckfeder dient, wobei die Druckfeder vorzugsweise an einem am Stator befestigten Gegenhalter abgestützt ist.

Ein Vibrieren der Bremseinrichtung bei bestromter Ständerregelung lässt sich vorteilhafter Weise dadurch verhindern, dass im Ausrückarm des Bremselements eine Kurzschlusswicklung integriert ist.

### Zeichnung

Anhand eines in der Zeichnung dargestellten Ausführungsbeispiels wird nachfolgend die Erfindung näher erläutert. Es zeigen:
Figur 1 einen Teilschnitt durch einen Elektromotor,
Figur 2 einen Schnitt durch eine Statorhälfte ohne ein darin eingesetztes Bremselement und
Figur 3 eine Draufsicht auf den Stator des Elektromotors.

### Beschreibung eines Ausführungsbeispiels

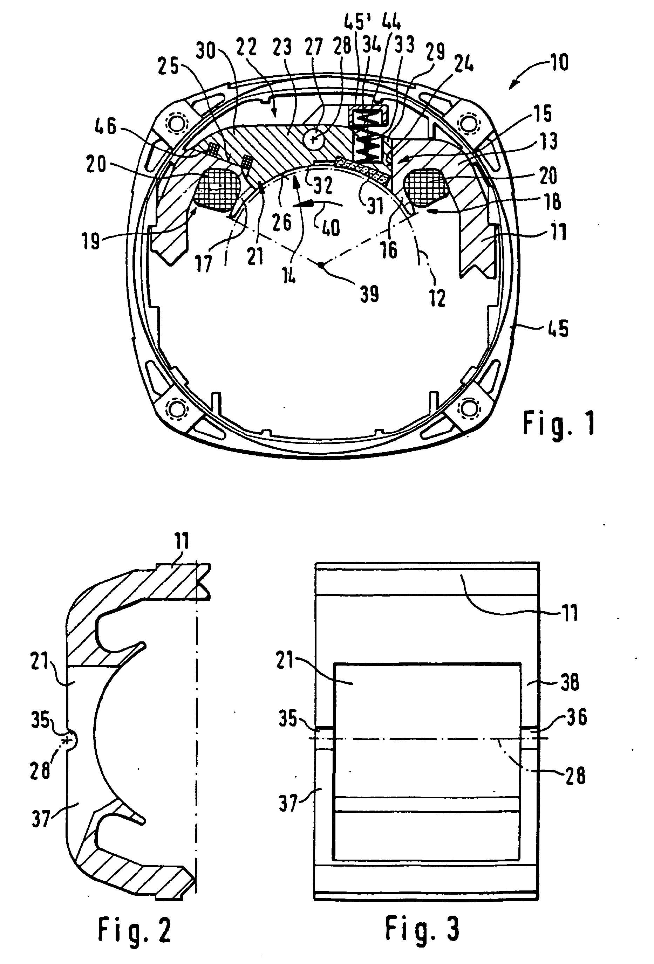

In der Figur 1 ist ein Querschnitt durch einen Elektromotor 10 dargestellt, der einen Stator 11 und einen Rotor 12 hat. Der Stator, von dem lediglich eine obere Hälfte dargestellt ist, bildet ein Polpaar, von dem ein Pol mit 14 bezeichnet ist. Der Pol 14 weist einen von einem Joch 13 nach innen zum Rotorumfang gerichteten Polschuh 15 auf, der beiderseits in Polhörnern 16, 17 ausläuft. Zwischen den Polhörnern 16, 17 und dem Joch 13 sind Ausnehmungen 18, 19 vorhanden, in denen eine Ständerwicklung 20 liegt. Die Ständerwicklung 20 umgibt somit den Polschuh 15.

Im Stator 11 ist im Bereich des Polschuhs 15 ein radial durchgehender Freiraum 21 gebildet, in den ein Bremselement 23 einer Bremseinrichtung 22 eingesetzt ist. Das Bremselement 23 füllt einen inneren Raum des Polschuhs 15 zwischen den Polhörnern 16, 17 aus und ist damit Teil des Polschuhs 15. Das Bremselement 23 bildet seitliche, gegenüber dem Stator 11 radial durchgehende Trennflächen 24, 25 sowie eine dem Rotor 12 zugewandte Polfläche 26. Das Bremselement 23 besteht aus magnetisch gut leitendem Material, so dass sich über die Trennflächen 24, 25 und die mit dem Rotor einen Luftspalt bildende Polfläche 26 ein von der Ständerwicklung 20 im Stator 11 erzeugter magnetischer Fluss nahezu ungedämpft ausbreitet.

Das Bremselement 23 ist vorzugsweise als Wippe ausgebildet, die auf einander abgewandten Seiten je einen axial hervorstehenden Zapfen 27 hat. Die beiden Zapfen 27 bilden dabei eine Schwenkachse 28, um die das Bremselement 23 gegenüber dem Polschuh 15 des Stators 11 in Grenzen schwenkbar gelagert ist. Das Bremselement 23 ist als zweiarmiger Hebel mit zu beiden Seiten der Schwenkachse 28 angeordneten Hebelarmen 29 und 30 ausgebildet. Einer der beiden Hebelarme 29, 30 bildet einen Bremsarm 29, der auf seiner dem Rotor 12 zugewandten Innenseite einen Bremsbelag 31 aufweist. Der andere Hebelarm 30 stellt einen Ausrückarm dar, der im Bereich der Polfläche 26 einen Luftspalt mit dem Rotor 12 bildet.

Der Bremsbelag 31 besteht aus einem Material, das in etwa die gleiche magnetische Leitfähigkeit aufweist wie der Polschuh 15 und das darin eingesetzte Bremselement 23. Ein solcher Bremsbelag erhöht nicht den magnetischen Widerstand des Bremselements und verringert damit auch nicht den magnetischen Fluss vom Stator zum Rotor. Damit wird eine unerwünschte Erhöhung der Leerlaufdrehzahl des Motors verhindert. Eine erhöhte Leerlaufdrehzahl ist nämlich gerade bei Elektrowerkzeugen, insbesondere bei Werkzeugen mit einem großen Durchmesser (wie z. B. Winkelschleifer) unerwünscht. Ein Bremsbelag mit einer guten magnetischen Leitfähigkeit kann z. B. dadurch erzeugt werden, dass ein Trägermaterial mit Eisenpulver gefüllt wird. Das Trägermaterial sollte möglichst abriebfest und sehr hitzebeständig sein. Vorteilhaft ist ein Material mit einem negativen Temperaturkoeffizienten, so dass mit steigender Temperatur der Reibungskoeffizient des Bremsbelags 31 abnimmt.

Eine Druckfeder 34 beaufschlagt den Bremsarm 29 mit einer Bremskraft 33 in Richtung auf den Rotor 12. Das Bremselement 23 ist somit außerhalb der Schwenkachse 28, d. h. außermittig mit der Bremskraft 33 beaufschlagt, wodurch ein Bremsmoment um die Schwenkachse 28 erzeugt wird. Die Schwenkachse 28 liegt dabei parallel zu einer Drehachse 39 des Rotors 12. Der Bremsarm 29 weist mindestens ein Sackloch 44 auf, das zur Aufnahme einer Druckfeder 34 dient. Die Druckfeder 34 ist an einem am Stator 11 befestigten Gegenhalter 45' abgestützt.

Der Bremsarm 29 des Bremselements 23 ist in einer durch einen Pfeil 40 bezeichneten Drehrichtung des Rotors 12 gesehen vor der Schwenkachse 28 angeordnet, wohingegen der Ausrückarm 30 hinter der Schwenkachse 28 liegt. Durch diese Hebelwirkung des als Wippe ausgebildeten Bremselements 23 entsteht eine hohe Bremswirkung, weil nämlich ein Kräftepaar aus Reibkraft und Lagerreaktionskraft ein Drehmoment um die Schwenkachse 28 in Richtung der Bremskraft 33 bildet.

Wird der Elektromotor 10 eingeschaltet, d. h. die Ständerwicklung 20 bestromt, wird im Stator 11 ein magnetischer Fluss induziert, der in der Trennfläche 25 zwischen dem Bremselement 23 und dem Polschuh 15 und in der Polfläche 26 des Bremselements 23 zum Rotor 12 hin eine Anziehungskraft auf das Bremselement 23 erzeugt. Diese Anziehungskraft bewirkt ein dem von der Druckfeder 34 ausgehenden Bremsmoment entgegengerichtetes, betragsmäßig höheres Ausrückmoment, das eine Ausrückbewegung des Bremselements 23 entgegen dem Bremsmoment bewirkt. In den Trennflächen 24, 25 zwischen dem Bremselement 23 und dem Polschuh 15 liegt hierzu ein ausreichendes Bewegungsspiel vor, das es dem Bremselement 23 ermöglicht, gegenüber dem Stator 11 eine begrenzte Schwenkbewegung um die Schwenkachse 28 durchzuführen, wobei der Bremsbelag 31 dann vom Rotor 12 abgehoben wird. Die Trennfläche 25 am Ausrückarm 30 hat einen größeren Radialabstand von der Schwenkachse 28 als die Trennfläche 24 am Bremsarm 29, so dass die in der Trennfläche 24 wirkende Anziehungskraft einen besonders hohen Beitrag zum Ausrückmoment leistet. Da der Bremsarm 29 im Bereich der Polfläche 26 einen größeren Abstand vom Rotor 12 hat als der Ausrückarm 30, sind an dieser Stelle im Gegensatz zum Ausrückarm 30 erheblich geringere Anziehungskräfte vorhanden. Um ein von der Frequenz der Netzspannung abhängiges Vibrieren der Bremseinrichtung 22 bei bestromter Ständerwicklung 20 zu verhindern, befindet sich im Ausrückarm 30 eine Kurzschlusswicklung 46 in unmittelbarer Nähe zu der Trennfläche 25. Der Rotor 12 kann aber auch eine dem Pfeil 40 entgegengesetzte Drehrichtung haben.

Wird der Elektromotor 10 wieder ausgeschaltet, lässt die magnetische Wirkung der Ständerwicklung 20 nach, so dass die Anziehungskraft am Ausrückarm 30 in der Trennebene 25 und in der Polfläche 26 ebenfalls nachlässt. Das Bremsmoment überwiegt dann wieder, so dass der Bremsarm 29 mit dem Bremsbelag 31 von der Druckfeder 34 gegen den Rotor 12 gepresst wird, was zu einer Abbremsung des Rotors 12 führt. Die Bremseinrichtung 22 löst daher mit Abschalten des Elektromotors 10 automatisch aus, so dass beispielsweise bei einem Winkelschleifer das Auslaufen der Trennscheibe nach Abschalten des Motors schon nach kurzer Zeit selbsttätig gestoppt wird. Der in Figur 1 nur halbseitig dargestellte Stator 11 hat in der nicht dargestellten unteren Bildhälfte einen weiteren Pol, der ebenfalls mit einer Bremseinrichtung versehen sein kann. Mit einer weiteren Bremseinrichtung im zweiten Pol kann die Bremswirkung noch weiter verstärkt werden.

In Figur 2 ist die obere Hälfte des Stators 11 aus Figur 1 ohne das darin einzusetzende Bremselement 23 dargestellt. Man erkennt, dass der Freiraum 21 axial nicht durchgehend ausgebildet ist, sondern axial von je einem Steg 37, 38 mit durchgehendem Statormaterial begrenzt ist. Der Freiraum 21 ist somit fensterförmig ausgebildet, was in Figur 3 in einer Draufsicht auf den Stator noch deutlicher zu erkennen ist. Die Stege 37, 38 sind jeweils mit halbkreisförmigen Ausnehmungen 35, 36 versehen, die als Auflage für die Zapfen 27 des wippenartigen Bremselements 23 dienen. Auf diese Weise wird die Schwenkachse 28 gebildet.

Die Erfindung ist nicht allein auf das gezeigte Ausführungsbeispiel beschränkt. So kann die erfindungsgemäße Bremseinrichtung auch bei mehr als zweipoligen Elektromotoren eingesetzt werden. Die Bremskraft kann auch unmittelbar am Bremsbelag bzw. an einem diesen tragenden Bauteil angreifen, wobei das Bremselement dann als Ausrückwippe dient, die mit dem Bremsbelag bzw. dem diesen tragenden Bauteil gekuppelt ist. Als Druckfeder können auch ein oder mehrere Blattfederbleche verwendet werden, die im Polschuh 15 bzw. am Stator 11 befestigt sind und die nötige Bremskraft erzeugen.

Der Einsatz des erfindungsgemäßen Bremsbelags ist nicht ausschließlich auf ein wippenartiges Bremselement, wie zuvor beschrieben, beschränkt. Das Bremselement kann auch so im Stator 11 gelagert sein, dass es eine radiale Bewegung bezüglich der Rotorachse 39 durchführt.

## Patentansprüche

1. Elektromotor, insbesondere für Elektrowerkzeuge, dessen Stator (11) mindestens einen, einen Teilbereich des Rotors (12) überdeckenden Polschuh (15) aufweist, wobei in dem Polschuh (15) ein in Richtung auf den Rotor (12) bewegbares Bremselement (23) angeordnet ist, das an seiner auf den Rotor (12) aufsetzbaren Stelle mit einem Bremsbelag (31) versehen ist, **dadurch gekennzeichnet, dass** der Bremsbelag (31) in etwa die gleiche magnetische Leitfähigkeit wie der Polschuh (15) und das darin eingesetzte Bremselement (23) aufweist.

2. Elektromotor nach Anspruch 1, **dadurch gekennzeichnet, dass** der Bremsbelag (31) ein mit Eisenpulver gefülltes Trägermaterial ist.

3. Elektromotor nach Anspruch 1, **dadurch gekennzeichnet, dass** das Bremselement (23) als Wippe ausgebildet ist, die in einem radial durchgehenden Freiraum (21) im Polschuh (15) aufgehängt ist.

4. Elektromotor nach Anspruch 3, **dadurch gekennzeichnet, dass** der Freiraum (21) axial jeweils von einem Steg (37, 38) begrenzt ist.

5. Elektromotor nach Anspruch 4, **dadurch gekennzeichnet, dass** das Bremselement (23) gegenüber dem Stator (11) um eine Schwenkachse (21) in Grenzen schwenkbar gelagert ist.

6. Elektromotor nach Anspruch 5, **dadurch gekennzeichnet, dass** die Schwenkachse (28) parallel zu einer Drehachse (39) des Rotors (12) liegt.

7. Elektromotor nach einem der vorhergehenden Ansprüche, **dadurch gekennzeichnet, dass** das Bremselement (23) seitlich mit je einem Zapfen (27) versehen ist, der jeweils in Ausnehmungen (35, 36) der Stege (37, 38) eingreift und die Schwenkachse (28) bildet.

8. Elektromotor nach einem der vorhergehenden Ansprüche, **dadurch gekennzeichnet, dass** das Bremselement (23) als mehrarmiger Hebel mit einem Bremsarm (29) und einem Ausrückarm (30) gebildet ist, wobei der Bremsarm (29) mit einer Bremskraft beaufschlagt ist und der Ausrückarm (30) bei bestromter Ständerwicklung (20) eine der Bremskraft entgegengerichtete Ausrückkraft auf das Bremselement (23) ausübt.

9. Elektromotor nach Anspruch 8, **dadurch gekennzeichnet, dass** eine Trennfläche (25) zwischen dem Ausrückarm (30) und dem Polschuh (15) einen größeren Radialabstand von der Schwenkachse (28) hat als eine Trennfläche (24) zwischen dem Bremsarm (29) und dem Polschuh (15).

10. Elektromotor nach einem der vorhergehenden Ansprüche, **dadurch gekennzeichnet, dass** der Bremsarm (29) mindestens ein Sackloch (41) hat, das zur Aufnahme einer Druckfeder (34) dient.

11. Elektromotor nach Anspruch 10, **dadurch gekennzeichnet, dass** die Druckfeder (34) an einem am Stator (11) befestigten Gegenhalter (45') abgestützt ist.

12. Elektromotor nach einem der vorhergehenden Ansprüche, **dadurch gekennzeichnet, dass** im Ausrückarm (30) des Bremselements (23) eine Kurzschlusswicklung (46) integriert ist.

## Claims

1. Electric motor, in particular for electric tools, the stator (11) of the said electric motor having at least one pole shoe (15) which covers a subregion of the rotor (12), with a brake element (23), which can be moved in the direction of the rotor (12), being arranged in the pole shoe (15) and being provided with a brake lining (31) at its point which can be placed on the rotor (12), **characterized in that** the brake lining (31) has approximately the same magnetic permeability as the pole shoe (15) and the brake element (23) which is inserted into the said pole shoe.

2. Electric motor according to Claim 1, **characterized in that** the brake lining (31) is a carrier material which is filled with iron powder.

3. Electric motor according to Claim 1, **characterized in that** the brake element (23) is in the form of a rocker which is suspended in a radially continuous clearance (21) in the pole shoe (15).

4. Electric motor according to Claim 3, **characterized in that** the clearance (21) is axially bounded by a web (37, 38) in each case.

5. Electric motor according to Claim 4, **characterized in that** the brake element (23) is mounted such that it can be pivoted to a certain extent about a pivot axis (21) in relation to the stator (11).

6. Electric motor according to Claim 5, **characterized in that** the pivot axis (28) is parallel to a rotation axis (39) of the rotor (12).

7. Electric motor according to one of the preceding claims, **characterized in that** the brake element (23) is provided with a respective pin (27) on the sides, the said pin in each case engaging in recesses (35, 36) in the webs (37, 38) and forming the pivot axis (28).

8. Electric motor according to one of the preceding claims, **characterized in that** the brake element (23) is formed as a multi-arm lever having a brake arm (29) and a disengagement arm (30), wherein the brake arm (29) is acted on by a braking force and the disengagement arm (30) exerts a disengagement force, which is directed in the opposite direction to the braking force, on the brake element (23) when power is supplied to the stator winding (20).

9. Electric motor according to Claim 8, **characterized in that** a separating surface (25) between the disengagement arm (30) and the pole shoe (15) is at a greater radial distance from the pivot axis (28) than a separating surface (24) between the brake arm (29) and the pole shoe (15).

10. Electric motor according to one of the preceding claims, **characterized in that** the brake arm (29) has at least one blind hole (41) which serves to accommodate a compression spring (34).

11. Electric motor according to Claim 10, **characterized in that** the compression spring (34) is supported on a mating holder (45') which is attached to the stator (11).

12. Electric motor according to one of the preceding claims, **characterized in that** a squirrel-cage winding (46) is integrated in the disengagement arm (30) of the brake element (23).

## Revendications

1. Moteur électrique, en particulier pour outil électrique, dont le stator (11) présente au moins un sabot polaire (15) qui recouvre une partie du rotor (12),
un élément de freinage (23) apte à se déplacer en direction du rotor (12) et doté d'une garniture de freinage (31) en son emplacement qui vient se placer sur le rotor (12) étant disposé dans le sabot polaire (15),
**caractérisé en ce que**
la garniture de freinage (31) présente sensiblement la même conductivité magnétique que le sabot polaire (15) et que l'élément de freinage (23) qui y est inséré.

2. Moteur électrique selon la revendication 1, **caractérisé en ce que** la garniture de freinage (31) est un matériau de support rempli de poudre de fer.

3. Moteur électrique selon la revendication 1, **caractérisé en ce que** l'élément de freinage (23) est configuré comme bascule suspendue dans une cavité (21) qui traverse radialement le sabot polaire (15).

4. Moteur électrique selon la revendication 3, **caractérisé en ce que** la cavité (21) est délimitée dans les deux sens axiaux par une nervure (37, 38).

5. Moteur électrique selon la revendication 4, **caractérisé en ce que** l'élément de freinage (23) est monté de manière à pivoter de manière limitée par rapport au stator (11) autour d'un axe de pivotement (21).

6. Moteur électrique selon la revendication 5, **caractérisé en ce que** l'axe de pivotement (28) est parallèle à l'axe de rotation (39) du rotor (12).

7. Moteur électrique selon l'une des revendications précédentes, **caractérisé en ce que** l'élément de freinage (23) est doté de chaque côté d'un tourillon (27) qui s'engage chacun dans des découpes (35, 36) ménagées dans les nervures (37, 38) et qui forment l'axe de pivotement (28).

8. Moteur électrique selon l'une des revendications précédentes, **caractérisé en ce que** l'élément de freinage (23) est configuré comme levier multibras qui présente un bras de freinage (29) et un bras de recul (30), une force de freinage étant appliquée sur le bras de freinage (29) et le bras de recul (30) exerçant sur l'élément de freinage (23) une force de recul opposée à la force de freinage lorsque le bobinage (20) du stator est alimenté en courant.

9. Moteur électrique selon la revendication 8, **caractérisé en ce qu'**une surface de séparation (25) entre le bras de recul (30) et le sabot polaire (15) présente une plus grande distance axiale par rapport à l'axe de pivotement (28) qu'une surface de séparation (24) entre le bras de freinage (29) et le sabot polaire (15).

10. Moteur électrique selon l'une des revendications précédentes, **caractérisé en ce que** le bras de freinage (29) présente au moins un trou aveugle (41) qui sert à reprendre un ressort de poussée (34).

11. Moteur électrique selon la revendication 10, **caractérisé en ce que** le ressort de poussée (34) s'appuie sur un contre-appui (45') fixé sur le stator (11).

12. Moteur électrique selon l'une des revendications précédentes, **caractérisé en ce qu'**un enroulement en court-circuit (46) est intégré dans le bras de recul (30) de l'élément de freinage (23).
